# EUROPEAN PATENT SPECIFICATION

(11) **EP 2 937 251 B1**
(45) Date of publication and mention of the grant of the patent: **12.07.2017**
(21) Application number: 14165819.5
(22) Date of filing: 24.04.2014
(51) Int. Cl.: B60R 22/48, B60R 21/015

(54) **Seat belt position detecting system and method**
System und Verfahren zur Detektion der Position des Sicherheitsgurts
Système de détection de position de ceinture de sécurité et procédé

(43) Date of publication of application: 28.10.2015
(73) Proprietor: Volvo Car Corporation, 40 531 Göteborg (SE)
(72) Inventor: Mårtensson, Emma, 42933 Kullavik (SE); Aldeborg, Gert, 45197 Uddevalla (SE)
(74) Representative: Volvo Car Corporation

(56) References cited:
- EP-A1- 2 210 765
- DE-A1- 10 133 759
- DE-A1- 19 637 108

## Description

### TECHNICAL FIELD

The invention pertains to a detecting system for detecting a position of a seat belt applied to a person seated in a vehicle seat in a vehicle, the detecting system including at least one detecting unit. The invention also relates to a method for determining the position of a seat belt applied to a person seated in a vehicle seat. The invention is applicable to any vehicle in which occupants are restrained in a vehicle seat by means of a seat belt, such as in a car, a bus, a truck, a vessel, an aircraft, etc.

### BACKGROUND

Vehicles such as cars, buses, trucks, etc. are normally equipped with different kinds of safety arrangements to prevent or at least mitigate the effects of an accident. In order to keep a person who is travelling in the vehicle securely restrained in a vehicle seat during the ride, it is common to provide each vehicle seat with a seat belt. Seat belts, also known as safety belts, are well known in the art and include lap-diagonal belts, diagonal belts and simple lap belts. The seat belts are commonly of the type provided with spring-loaded reels or retractors having a locking mechanism that allows slow extension of the belt during application of the belt and during normal conditions while travelling in the vehicle. This allows a person strapped in a vehicle seat a limited degree of freedom to move in the seat. However, in a situation where the vehicle is decelerating forcefully, the locking mechanism in the seat belt reel locks the seat belt and prevents further extension of the seat belt. A seat belt retractor is often combined with a seat belt tensioning arrangement, which is activated to tighten the seat belt in case of a situation such as an imminent crash or forceful braking.

In order to ascertain that a person travelling in a vehicle is actually wearing a provided seat belt, it has been suggested to detect whether the seat belt has been fastened or not. It has also been suggested to check whether a fastened seat belt is properly applied and whether it remains fastened during ride by detecting the presence of the seat belt in a seat belt holder, in particular in a seat belt holder on a child seat. A seat belt detecting system of this kind is disclosed in FR2869858.

A common method for checking whether a seat belt is properly applied is to measure the length of seat belt that has been pulled out from a seat belt reel, e.g. as is disclosed in GB2236419A or US2007257474A1. Although the extended seat belt length may give an indication that a sufficient amount of seat belt is available for proper belting, it provides only a rough estimate of the actual seat belt configuration. It is still possible for the belted person sitting in the vehicle seat to have the seat belt applied in a non-optimal or even dangerous configuration. The seat belt may have been incorrectly applied e.g. by having an upper diagonal belt section extending over the neck of the belted person instead of over the torso of the belted person, or the seat belt may have been manipulated by the belted person into an incorrect position e.g. by extricating an arm from under the upper belt section to above the upper belt section such that the belt section comes to rest in the armpit of the person instead of over the shoulder. Moreover, the belted person may have moved in the seat, e.g. by leaning forward and may thus have extended the seat belt excessively. In a critical traffic situation it may be desirable to be able to ascertain that an occupant of the vehicle is properly belted and correctly seated in the vehicle seat before deploying safety equipment such as air-bags, belt tensioners, etc.

DE 101 33 759 A1 discloses seat belt detection by means of an image processing system allowing determination of the position of a seat belt, the belt configuration, whether a vehicle seat is occupied, determination of the position of parts of a body of a passenger, such as the head, etc.

EP 2 210 765 A1 discloses a vehicle interior state recognition device and is mainly concerned with detection of the body size of a person seated in the vehicle. The device may also be used to check the application state of a seat belt by checking on a portion of the shoulder belt portion which is located near the vehicle-body inside portion and which does not overlap with a seat or with a passenger body.

DE 196 37 108 A1 discloses a passenger protection system which is designed to ascertain that a proper safety distance between a passenger and an air bag is available when an air bag is deployed. The safety distance is determined by means of radiation which is reflected from reference points or areas on the safety belt.

Accordingly, there remains a demand for an improved system and method for detecting a position of a seat belt applied to a person seated in a vehicle seat.

### SUMMARY OF THE INVENTION

An object of the invention as set out herein is to provide an improved system, kit, and method for detecting the positioning of a seat belt on the body of a person.

This object may be achieved by the subject-matter of claims 1 and 9. Embodiments are set forth in the appended dependent claims, in the following description, and in the drawings.

As disclosed herein, there is provided a detecting system for detecting a position of a seat belt applied to a person seated in a vehicle seat in a vehicle, the detecting system including at least one detecting unit. The at least one detecting unit is an electromagnetic radiation detecting unit, and the detecting system is configured to determine the presence of a seat belt in at least one location on the body of the person seated in the vehicle seat, based on radiation data retrieved from the detecting unit.

The detecting system is designed to determine the presence of a seat belt within at least one detection location on the body of a belted person i.e. to determine whether the seat belt is present in the detection location or not. As used herein, a location "*on the body*" of a person is a location within a projected area from the detecting unit on the body of the person, regardless of whether a seat belt is present in the location, or not. When a person is wearing a seat belt, the seat belt is considered to be "*on the body*" of the belted person.

The seat belt may be any type of seat belt as known in the art and may be a lap-diagonal belt, also known as a three-point belt, or a diagonal belt or a simple lap belt. Furthermore, the seat belt may have a more complicated structure, such as found in four, five, and six point belts. The seat belt may be of the type provided with a spring-loaded reel, also known as a retractor, having a locking mechanism that allows slow extension of the belt during application of the belt and during normal movements while travelling in the vehicle.

In order to improve seat belt detection and seat belt geometry analysis based on the detected electromagnetic radiation data, the seat belt may be provided with a radiofrequency-identification tag, RFID tag, may be made of a material that emits/reflects electromagnetic radiation which is distinctive from that emitted/reflected from seat upholstery and a human body and clothing. The properties of the seat belt may be enhanced to improve imaging, and image analysis, e.g. by using a seat belt being made from a material having a distinctive colour, being highly reflective or including reflective particles, e.g. nano-particles, and/or fibres, or a material having a distinctive pattern, etc. The seat belt may be colour coded and/or pattern coded with different colours and/or patterns in different portions of the seat belt. A seat belt having different detection properties in different portions may be beneficial in the detection of a proper body/seat belt position in relation to the back rest of the vehicle seat, i.e. to detect if a belted person is leaning forwards and/or to a side in the seat.

The detecting system as disclosed herein, affords the possibility of determining the position of a seat belt by means of equipment which is not physically associated with the seat belt or any fixture or fastening device belonging to a seat belt arrangement. Accordingly, the detecting system as disclosed herein may be used for detecting a position of any seat belt arrangement in a vehicle, regardless of whether the seat belt arrangement is completely pre-mounted in the vehicle or whether it comprises external components such as belting components in a removable child seat.

The system aids a person seated in a vehicle seat or a helper to a person seated in a vehicle seat to apply and adjust a seat belt correctly and to ascertain that the seat belt is kept correctly applied while the person is seated in the vehicle seat.

The detected electromagnetic radiation may be radar, infrared radiation, micro waves, radio waves, visible light or any combination thereof.

The detecting unit is placed in the vehicle at a distance from the vehicle seat and at a distance from the seat belt arrangement and is configured to receive and register electromagnetic radiation from at least one location on the body of the person who is seated in the vehicle seat. This means that the electromagnetic radiation detecting unit is separate from the seat belt which it is arranged to detect.

The detecting unit may be placed in any suitable location in the vehicle such as on a dashboard, on a rear-view mirror, on a windscreen or above the windscreen, in the vehicle ceiling, at the back of a vehicle seat, on a headrest, on an A, B or C pillar, etc. The detecting arrangement may comprise more than one detecting unit which together detect the position of a single seat belt. The detecting units are then preferably placed at different locations in the vehicle in order to detect electromagnetic radiation from different angles, which may be used to create a three-dimensional representation of the seat belt configuration. By way of example, a first detecting arrangement may be placed forward of the vehicle seat and the seat belt arrangement and a second detecting arrangement may be placed at a side of the vehicle seat and the seat belt arrangement. Furthermore, the same detecting unit may be used in detecting the position of more than one seat belt. It is further conceivable to have a detecting unit allocated to each seat and to combine information from a detecting unit being allocated to a single seat and seat belt with electromagnetic radiation information from a detecting unit being set to detect electromagnetic radiation from more than one seat belt. Accordingly, any combination and set-up of detecting units may be employed, as disclosed herein.

A target location is a location on the body of a person seated in a vehicle seat in which a correctly applied seat belt should be present. The target location is pre-set in the detecting system. The detecting system may be set to receive and register electromagnetic radiation from multiple locations on the body of the belted person. In order to determine a position of a three-point seat belt, i.e. a lap-diagonal seat belt, it may be desirable to detect electromagnetic radiation from at least two target locations, such as a location positioned in the torso area of the belted person and a location positioned in the waist area of the belted person. Radiation may be detected from any desired number of separate locations depending on the level of detail that is desired for the information concerning the actual geometry of the seat belt and may be from 2 to 100 locations, such as from 4 to 50 locations or from 5 to 20 locations. Additionally, or as an alternative to detection of separate locations, the detecting system may be configured to detect electromagnetic radiation from a continuous detection area.

The detected electromagnetic radiation may emanate from a radiation source placed in the vehicle, such as a radar source. In such case the detecting unit is arranged to detect reflected radar signals. In the case of the detected electromagnetic radiation being visible light the light may be incident light and/or may emanate from a light source inside the vehicle. Furthermore, the detected radiation may be infrared radiation, IR, such as IR emitted from the body of the belted person. Visible light and/or IR may be detected by means of a camera. The properties of the seat belt may be adapted to enhance the result of the detection. By way of example, the seat belt may include reflective material, luminescent material, etc., as set out herein.

It may be preferred that the at least one detecting unit is configured to detect electromagnetic radiation from multiple locations within a target area on the body of a belted person, which target area consists of target locations for a correctly applied seat belt, and/or to detect electromagnetic radiation from multiple locations outside the target area for a correctly applied seat belt. The multiple locations may be discrete locations distributed within a detected area and/or may be a continuum of locations within the detected area, as when detecting and registering electromagnetic radiation by means of a camera to form an image of the detected area. A continuous detected area includes a target area for a correctly applied seat belt, which target area is defined by the target geometry for the correctly applied seat belt.

The detecting system as disclosed herein is configured to determine an actual location or geometry/configuration of the seat belt in relation to the body of the person being seated in the vehicle seat and to compare the actual location or geometry of the seat belt with a target location or geometry for the seat belt. A target location or a target geometry for the seat belt is a location or configuration of the seat belt which is pre-determined to be a "correct" or "optimal" seat belt location or configuration. Target location(s) or a target geometry is pre-set in the detecting system and the detecting system may be arranged to adapt the target location(s) or target geometry according to factors such as size and seating position of the belted person, whether a child seat or booster seat is used, and/or to traffic conditions. Accordingly, a target location or target geometry may be set to allow a pregnant occupant in the vehicle to wear a waist portion of the seat belt below the belly or to cause a safety system to tension the seat belt in order to keep a sleeping person more firmly held in the seat. Furthermore, the seat belt position detecting system may be in communication with a hazard detection system and may allow a more lax belt configuration when the vehicle is cruising without any danger being detected such as poor weather conditions, poor road conditions, or an imminent collision.

The detecting system as disclosed herein is configured to inform an occupant in the vehicle of a status of application of the seat belt, based on the comparison between an actual location and/or the actual geometry of the seat belt with a target location and/or a target geometry set for the seat belt.

By way of example, if the actual geometry deviates from the target geometry, the system may inform either the incorrectly belted person and/or one or more other occupant(s) in the vehicle of the discrepancy.

The information may be in the form of a visual, acoustic or haptic, i.e. sensory, warning signal being sent if the detecting system detects that the seat belt configuration is defective.

Information from the detection system may be continuously communicated to any occupant in the vehicle, allowing the occupant to monitor the status of the seat belt on the belted person. Such information is in form of an image of the actual seat-belt geometry in relation to a target geometry shown on a display, such as a display in an infotainment system. The option of being able to monitor the status of the seat belt configuration informs the occupant that the seat belt should be adjusted if it has shifted out of the target position. Accordingly, the occupant may become alerted to a poor seat belt configuration and may adjust the seat belt so that it again matches the target geometry. Furthermore, it may be useful for an occupant in the vehicle different from the monitored belted person to be able to check the status of the seat belt. One such case may be when the belted person is a child seated in a rear seat of the vehicle and the driver wants to be able to check that the child is properly belted.

The detecting system is configured to communicate information concerning the seat belt configuration to the occupant via an infotainment system in the vehicle. The information may be one or more warnings and/or continuously generated status information. An advantage of using the infotainment system to inform the occupant about seat belt status is that e.g. a warning may interrupt an ongoing activity in the infotainment system, such as a movie or music and will efficiently alert an occupant in the vehicle who is using the infotainment system.

The infotainment system may be only one of multiple channels communicating information about the seat belt geometry. By way of example, a visual/audio signal sent via the infotainment system may be augmented by a haptic signal from the vehicle seat. Accordingly, any combination of messages and signals may be used to inform occupants in the vehicle about the status of application and the configuration of a seat belt. Moreover, different warning signals and/or different intensity in the warning signals may be used depending on the severity of the detected anomaly in the seat belt geometry and/or depending on the current traffic situation.

In addition to the electromagnetic radiation detecting unit, the detecting system may comprise one or more other sensors selected from mechanical sensors, electronic sensors, heat sensors and combinations thereof.

Such additional sensors may be seat belt tensioning sensors, sensors detecting the extended belt length, pressure sensors, sensors detecting the status of seat belt buckles, etc.

The system may further be configured to allow the detecting unit to be turned off. In case a single detecting unit is used to detect the seat belt configuration from more than one seat in a vehicle, the system may be configured to allow detection to be turned off individually for each seat serviced by the detecting unit. The option to turn off detection of the seat belt configuration may be useful e.g. in case the seat belt is used to fasten a rearward-facing child seat in the vehicle, or when an object is placed in the vehicle seat which may otherwise cause the seat belt position detection system to detect an unbelted person in the seat.

The disclosure further relates to a kit of parts comprising at least one detecting unit, which is an electromagnetic radiation detecting unit being configured to detect electromagnetic radiation from a seat belt and a seat belt being adapted to reflect or emit electromagnetic radiation detectable by the detecting unit.

A method as disclosed herein for determining the position of a seat belt applied to a person seated in a vehicle seat in a vehicle comprises:
- detecting electromagnetic radiation from at least one location on the body of the person seated in the vehicle seat;
- determining a presence or a non-presence of a seat belt in said at least one location based on radiation data obtained in the preceding detection step.

The method further comprises detecting electromagnetic radiation from one or more locations within a target area for a correctly applied seat belt.

The method further comprises detecting electromagnetic radiation from one or more locations outside the target area for a correctly applied seat belt. Accordingly, the method may comprise mapping presence and non-presence of the seat belt on the body of a belted person. The result of the mapping may be used to determine an actual geometry of the seat belt in relation to the body of the person being seated in the vehicle seat.

One or more actual detected location(s) and/or an actual detected geometry of the seat belt are subsequently compared with one or more target location(s) and/or a target geometry for the seat belt in order to check whether the actual location(s) and/or the actual detected location(s) and or the actual detected geometry conforms to the target location(s) and/or the target geometry. If the actual detected location(s) and/or the actual geometry is found to significantly deviate from the target values, it may be determined that the seat belt is wrongly applied and needs to be adjusted. The amount of deviation permitted before the system detects a "significant" deviation may be set in the system and may be personalized to compensate for body size, seating position, physical conditions in the belted person such as pregnancy, an injured arm, etc. and/or to be adapted to different driving conditions, as set out herein.

The method as disclosed herein further comprises informing an occupant in the vehicle of a status of application of the seat belt, based on the comparison between the detected actual geometry or configuration of the seat belt and a pre-set target geometry or configuration for the seat belt. The terms "seat belt geometry" and "seat belt configuration" are used interchangeably herein and should be understood as relating to the geometry or configuration of the seat belt on the body of a belted person. The seat belt geometry or seat belt configuration detected ty the system as disclosed herein, may not be the seat belt geometry of the whole seat belt, but may be a configuration/geometry of one or more critical portions of the seat belt such as an upper portion and/or a lap portion.

Furthermore, the method comprises communicating the information to the occupant via an infotainment system in the vehicle, as set out herein.

The method may comprise detecting the electromagnetic radiation continuously or intermittently and determining and optionally also communicating the actual seat belt geometry continuously or intermittently during the ride in the vehicle. By "continuously" in this context is implied also intermittent determinations and/or communications which are performed with such short time intervals that they are effectively continuously performed and/or are perceived as being continuously performed.

The method may further comprise:
- making a first determination that the seat belt is incorrectly positioned based on the radiation data retrieved from the at least one detected location;
- making a second determination that the seat is incorrectly positioned based on the radiation data retrieved from the at least one detected location, the second determination being made within a pre-set time period from the first determination;
- optionally repeating the second determination one or more times;
- detecting an incorrect seat belt position; and
- issuing a warning that the seat belt is incorrectly positioned.

Accordingly, the system may be set not to issue a warning that the seat belt is incorrectly positioned until at least two subsequent detections have been made indicating that the seat belt is out of position and has remained out of position for a pre-set time period. The pre-set time period may be set dependent on the traffic situation, weather conditions, etc., as set out herein.

### BRIEF DESCRIPTION OF THE DRAWINGS

The present invention will be further explained hereinafter by means of non-limiting examples and with reference to the appended drawing wherein:
- Fig. 1: shows a side view of a vehicle interior; and
- Fig. 2: shows a front view of a person seated in a vehicle seat and wearing a seat belt.

### DETAILED DESCRIPTION

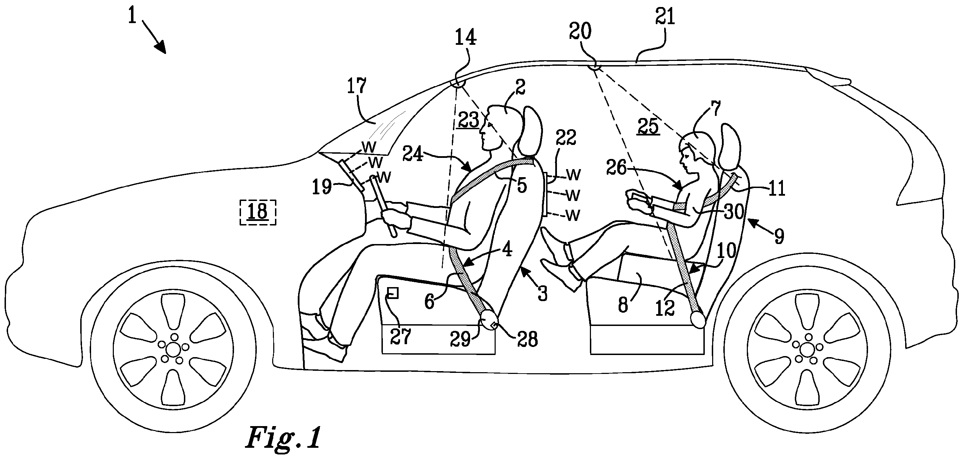

With reference to Fig. 1, there is shown a schematic side view of the interior of a vehicle 1. The vehicle is shown in the form of a car, but it is to be understood that the invention is equally applicable to any vehicle in which the occupants are restrained in their seats by seat belts such as buses, trucks, etc.

A first person, who is the driver 2 of the vehicle 1, is seated in a driver's seat 3 and is restrained in the driver's seat 3 by means of a driver's seat belt 4 which is a three-point belt having an upper diagonal belt section 5 applied across the chest of the driver 2 and a lower lap section 6 applied across the waist of the driver 2. A second person, a child 7, is seated on a booster seat 8 which is placed in a rear seat 9. The child 7 is restrained in the rear seat 9 by means of a rear seat belt 10 which is also a three-point belt having an upper diagonal belt section 11 applied across the chest of the child 7 and a lower lap section 12 applied across the waist of the child 7.

The vehicle 1 is equipped with a detecting system for detecting the position of the seat belts 4, 10 applied to the driver 2 and to the child 7. The detecting system includes a front belt detecting unit 14 mounted above the windscreen 17 of the vehicle 1. Alternative or additional positions for the front belt detecting unit 14 may be on a rear view mirror, on the dashboard, in the ceiling of the vehicle or at a side of the vehicle compartment such as above a side window or on an A, B, or C pillar. The front belt detecting unit 14 may be arranged to only detect the positioning of a seat belt which is used in the driver's seat 3, or may be arranged to also detect the positioning of a seat belt which is used in the passenger seat. In case the front belt detecting unit 14 is dedicated to the driver's seat 3, a separate front belt detecting unit (not shown) may be provided for the passenger seat. As disclosed herein, the front belt detecting unit 14 is an electromagnetic radiation detecting unit and the detecting system is configured to determine the presence of a seat belt in at least one location on the body of the driver 2 based on data retrieved from the front belt detecting unit 14. The data collected by the front belt detecting unit 14 is processed in a schematically shown central processing unit, CPU, 18. The processed data concerning the seat belt position is conveyed as information to the driver 2 by means of a first information device 19 which is shown placed on the vehicle's dashboard.

The detecting system further includes a rear belt detecting unit 20 mounted in the ceiling 21 of the vehicle 1 forward of the rear seat 9. Alternative positions for the rear belt detecting unit 20 may be on the back of a front seat, on the back of a front seat head rest, or centrally between the driver's seat and the front passenger seat. The rear belt detecting unit 20 may be arranged to only detect the positioning of a seat belt which is used in the seat position shown in Fig. 1, or may be arranged to also detect the positioning of one or more additional seat belts which are used in the rear seat 9. By way of example, in a car having room for three belted passengers in the rear seat, one rear belt detecting unit 20 may be used to monitor two or all three seat belt positions, or each seat belt position may be serviced by a dedicated rear belt detecting unit. Furthermore, the detecting system may preferably be configured to allow the pre-set target seat belt configuration to be adjusted e.g. to compensate for the belted child 7 being seated on a booster seat 8.

As disclosed herein, the rear belt detecting unit 20 is an electromagnetic radiation detecting unit and the detecting system is configured to determine the presence of a seat belt in at least one location on the body of the belted child 7 based on data retrieved from the rear belt detecting unit 20. The data collected by the rear belt detecting unit 20 is also processed in the CPU, 18. The processed data concerning the seat belt position may be conveyed as information to the driver 2 by means of the first information device 19 and or to the child 7 by means of a second information device 22 which is shown placed on the back of the driver's seat 3.

The front belt detecting unit 14 detects electromagnetic radiation 23 from a detection area 24 on the front of the upper body of the driver 2. The rear belt detecting unit 20 detects electromagnetic radiation 25 from a detection area 26 on the front of the upper body of the child 7. The detection areas 24, 26 include target areas for the seat belt 4,10, which target areas are defined by the target geometry for the seat belt 4,10.

In the example shown in Fig. 1, the detecting system is configured to detect electromagnetic radiation 23 from a detection area 24 which detection area includes target locations for a correctly applied seat belt as well as locations outside the target locations for a correctly applied seat belt. As set out herein, the detecting system may be configured to detect the presence of a seat belt in a pre-determined location by detecting radiation from one or more discrete locations or by detecting radiation from a continuous detection area 24, 26.

For a three-point belt, as shown in the figures, it may be sufficient to detect radiation from only two locations, including one location corresponding to a position where the upper diagonal belt section 5, 11 is expected to be located when the belt is correctly applied and one location corresponding to a position where the lower lap belt section 6, 12 is expected to be located when the belt is correctly applied. Radiation may be detected from any desired number of locations depending on how detailed information concerning the actual geometry of the seat belt that is desired and the number of locations may be from 2 to 100 locations, such as from 4 to 50 locations or from 5 to 20 locations. The shown detection method where data is gathered from radiation emanating from the whole front area of the upper body of the belted persons 2, 7 allows the detecting system to make an analysis of the configuration of the seat belt in relation to the body of the belted person by comparing the radiation emanating from the body of the belted person with the radiation emanating from the seat belt. Accordingly, the detecting system may be configured to determine an actual geometry of the seat belt in relation to the body of the belted person. The actual seat belt geometry may be compared with a pre-determined target geometry for a correctly applied seat belt in order to determine if the actual seat belt geometry deviates from the geometry of a correctly applied seat belt. In a case where detection is carried out based on only a limited number of detected locations, the detected radiation data from the actual locations on the body of the belted person may be compared with pre-set target values for detected radiation in an analogous manner. If the system detects a deviation from a target location of the seat belt or a deviation from a target seat belt geometry, the system may communicate the information about the anomaly of the seat belt configuration through one or both of the information devices 19, 22.

The information devices 19, 22 may be supplemented by additional information equipment in the vehicle 1, such as loud-speakers, warning displays, etc. As set out herein, the information may be communicated as a warning signal, W W W, which may be a visual signal and/or an audio signal. The detecting system may be configured to issue a warning signal only after having detected a lasting seat belt geometry deviation, e.g. by determining that the seat belt has remained wrongly positioned over a pre-determined time period. The pre-determined time period may be set by the detecting system depending on vehicle speed, road conditions, weather conditions, etc. Furthermore, the detecting system may be configured to issue a warning signal only when the deviation in the seat belt configuration exceeds a pre-set threshold value and/or may be configured to continuously inform one or more of the occupants in the vehicle of the current wearing status of one or more of the seat belts in the vehicle. As used herein, the "wearing status" of a seat belt includes the positioning/configuration data from the detecting system and may include further information such as information relating to the extended belt length and information of whether the seat belt is in use and is properly buckled.

The information devices 19, 22 may be display/audio devices and may be part of an infotainment system in the vehicle 1.

The detecting system may additionally comprise one or more sensors such as mechanical sensors, electronic sensors, heat sensors and combinations thereof. The additional sensors may be used to detect the presence of a person sitting in a vehicle seat, an extended length of a seat belt, the tension in a seat belt, if the seat belt is fastened in a seat belt buckle, etc. A first additional sensor 27 is schematically indicated in the driver's seat 9 and a second additional sensor 28 is indicated in the seat belt reel 29 belonging to the driver's seat 9.

In the situation shown in Fig. 1, the seat belt configuration detecting system has detected a deviation in the application of the seat belt for the child 7 riding in the back seat and is sending out a warning signal, W W W, both through the front information device 19 and the rear information device 22. The deviation from the target configuration for a correctly worn seat belt is that the child 7 has pulled the left arm 30 up over the upper diagonal section 11 of the seat belt 10 so that the upper section 11 of the seat belt 10 rests in the child's arm-pit instead of across the shoulder as would have been the correct position for the seat belt. In case of a collision or other accident causing the seat belt to exert a high pressure on the upper body of the child, a seat belt that is wrongly applied in this manner may cause severe damage to the child's internal organs.

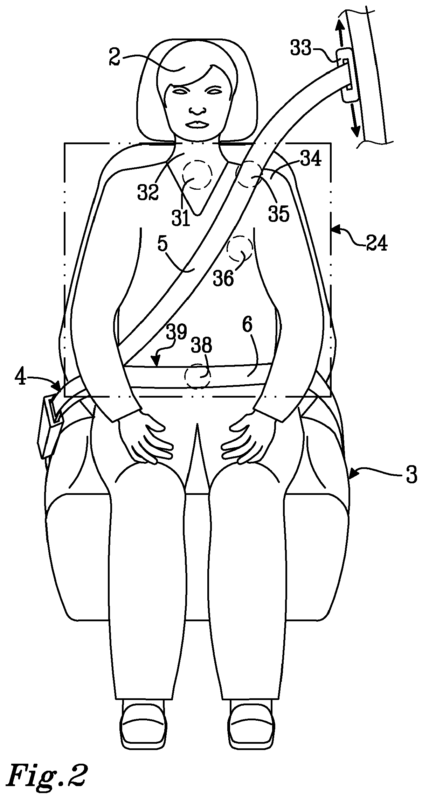

With reference to Fig. 2, there is shown a front view of an adult person 2 seated in a vehicle seat 3 and wearing seat belt 4 which is a three-point belt having an upper diagonal belt section 5 applied across the chest of the belted person 2 and a lower lap section 6 applied across the waist of the belted person 2.

In Fig. 2, a rectangular detection area 24 has been indicated to cover the upper body and the neck of the person 2 in the vehicle seat 3. A detection device for detection of electromagnetic radiation as disclosed herein may be configured to detect electromagnetic radiation from the detection area 24. As can be concluded from Fig. 2, the detection area 24 is a continuous area including detection locations within a target area for a correctly applied seat belt as well as detection locations outside the target area for a correctly applied seat belt. The detected radiation data may be analysed and processed in order to determine the positioning and geometry of the seat belt 4 in relation to the body of the belted person 2. The actual detected geometry of the seat belt 4 may be compared to a pre-set target geometry, in order to determine if the actual seat belt geometry deviates from the target geometry, as set out herein.

Detection of a large continuous area may be made by means of a conventional camera, or an IR camera. The properties of the seat belt 4 may be enhanced to improve imaging, and image analysis, e.g. by using a seat belt being made from a material having a distinctive colour, being highly reflective or including reflective particles and/or fibres, or a material having a distinctive pattern, etc. The seat belt may be colour coded to emphasize different portions of the seat belt. A seat belt having different detection properties in different portions may be beneficial in the detection of a proper body/seat belt position in relation to the back rest of the vehicle seat, i.e. to detect if the belted person 2 is leaning forwards and/or to a side in the seat.

As an alternative or in addition to detection of electromagnetic radiation from a continuous area 24, the detecting system may be configured to detect the presence of the seat belt in pre-determined locations by detecting radiation from one or more discrete locations. This is illustrated in Fig. 2 by a first location 31 on the front of the neck 32 of the belted person. The first location 31 is a location which does not correspond to a target location for a correctly applied seat belt 4. Accordingly, if the system detects the presence of the upper section 5 of the seat belt in this location, the system may signal that the seat belt 4 should be adjusted by moving the upper attachment member 33 downwards until the seat belt 4 instead extends over the shoulder 34 of the belted person 2.

A second location 35 is indicated on the shoulder 34 of the belted person. The second location 35 is a location which corresponds to a target location for a correctly applied seat belt 4. Accordingly, this is a location where a presence of the upper section 5 of the seat belt should be detected. A third location 36 is indicated at the arm-pit of the belted person 2. The third location 36 is a location which does not correspond to a target location for a correctly applied seat belt 4. If a presence of the seat belt is detected in this location, it may either be an indication that the upper attachment member 33 should be adjusted upwards to reach the proper position of the seat belt over the shoulder 34 of the belted person 2, or that the belted person 2 has the upper section 5 of the seat belt 4 incorrectly placed under the arm 37 instead of over the shoulder 34.

A fourth location 38 is indicated centrally on the lower part of the abdomen 39 of the belted person 2. The fourth location 38 is a location which corresponds to a target location for a correctly applied seat belt 4.

The four detection locations 31, 35, 36 and 38 disclosed herein are only provided as examples and should not be considered limiting to the invention. Accordingly, all four detection locations could be used independently of each other or in any combination. Furthermore, the disclosed detection locations 31, 35, 36 and 38 could be used in combination with or be substituted with other detection locations.

For a three-point belt, as shown in Figs. 1 and 2 it may e.g. be sufficient to detect radiation from the second location 35 corresponding to a position where the upper diagonal belt section 5, is expected to be located when the belt is correctly applied and from the fourth location 38 corresponding to a position where the lower lap belt section 6 is expected to be located when the belt 4 is correctly applied. Positioning/configuration data from the detecting system may include further information such as information relating to the extended belt length and information of whether the seat belt is in use and is properly buckled.

Discrete detection locations such as the detection locations 31, 35, 36 and 38 in Fig. 2 may be detected by detecting a radar signal, IR radiation, radiation from a RFID incorporated with the seat belt or visible light. In case of a radar signal, the seat belt 4 preferably contains a radar reflecting material.

In order to improve seat belt detection and belt geometry analysis based on the detected electromagnetic radiation data, the seat belt may be provided with a radio-frequency-identification, RFID, tag, may be made of a material that emits/reflects electromagnetic radiation which is distinctive from that emitted/reflected from seat upholstery and from a human body or human clothing.

## Claims

1. A detecting system for detecting a position of a seat belt applied to a person (2, 7) seated in a vehicle seat (3, 9) in a vehicle (1), said detecting system including at least one detecting unit (14, 20), wherein said at least one detecting unit is an electromagnetic radiation detecting unit (14, 20), the detecting system being configured to determine the presence of a seat belt (4, 10) in at least one location (31, 35, 36, 38) on the body of said person (2,7) seated in said vehicle seat (3,9), based on radiation data retrieved from said detecting unit (14, 20), wherein said at least one detecting unit is configured to detect electromagnetic radiation (23,25) from one or more locations (35, 38) within a target area for a correctly applied seat belt (4, 10) and to detect electromagnetic radiation (23,25) from one or more locations (31, 36) outside a target area for a correctly applied seat belt (4, 10) and to determine an actual location and/or an actual geometry of said seat belt in relation to said body of said person (2, 7) being seated in said vehicle seat (3, 10) and to compare said actual location and/or said actual geometry of said seat belt (4, 10) with a target location and/or a target geometry for said seat belt (4, 10), said detecting system being configured to inform an occupant (2, 7) in said vehicle (1) of a status of application of said seat belt (4, 10), based on said comparison between said actual location and/or said actual geometry of said seat belt with said target location and/or said target geometry for said seat belt, said detecting system being configured to communicate said information to said occupant (2,7) via an infotainment system in said vehicle (1), **characterized in that** said information is communicated in the form of an image of said actual seat-belt geometry in relation to said target seat-belt geometry.

2. A detecting system according to claim 1, wherein said detecting system is configured to detect a deviation between said actual location and/or said actual geometry of said seat belt (4, 10) from said target location and/or said target geometry for said seat belt (4, 10), and to determine if said detected deviation is a significant deviation, wherein said detecting system is configured to allow said significant deviation to be set in said detecting system.

3. A detecting system according to claim 2, wherein said detecting system is configured to allow said significant deviation to be personalized to compensate for body size, seating position and physical conditions in a belted person and/or to be adapted to different driving conditions.

4. A detecting system according to any one of the preceding claims, wherein said information from said detecting system is continuously communicated to an occupant in said vehicle allowing said occupant to monitor a status of said seat belt on a belted person.

5. A detecting system according to claim 4, wherein said occupant in said vehicle receiving said communicated information is different from said monitored belted person.

6. A detecting system according to any one of the preceding claims, wherein said infotainment system is configured to communicate different warning signals and/or warning signals of different intensity depending of the severity of a detected anomaly in said seat belt geometry and/or depending on a current traffic situation.

7. A detecting system according to any one of the preceding claims, wherein said seat belt (4, 10) is colour coded and/or pattern coded.

8. A detecting system according to any one of the preceding claims, wherein said seat belt (4, 10) includes reflective particles, and/or fibres.

9. A method for determining the position of a seat belt (4, 10) applied to a person (2, 7) seated in a vehicle seat (3,9) in a vehicle (1), said method comprising:
- detecting electromagnetic radiation (23,25) from one or more locations (35, 38) within a target area for a correctly applied seat belt (4,10);
- detecting electromagnetic radiation (23,25) from one or more locations (31, 36) outside said target area for a correctly applied seat belt (4,10);
- determining an actual location and/or an actual geometry of said seat belt (4, 10) in relation to said body of said person (2, 7) being seated in said vehicle seat (3, 9);
- comparing said actual location and/or said actual geometry of said seat belt (4, 10) with a target location and/or a target geometry for said seat belt (4, 10); and
- communicating information to an occupant (2, 7) in said vehicle (1) of a status of application of said seat belt (4, 10), based on said comparison between said actual location and/or said actual geometry of said seat belt (4, 10) and said target location and/or said target geometry for said seat belt (4, 10), said information being communicated via an infotainment system in said vehicle (1), **characterized in that** said information is communicated in the form of an image of said actual seat-belt geometry in relation to said target seat-belt geometry.

10. A method according to claim 9, further comprising:
- detecting a first deviation between said actual location and/or said actual geometry of said seat belt (4, 10) and said target location and/or said target geometry for said seat belt (4, 10);
- determining that said first deviation is a significant deviation;
- making a first determination that said seat belt (4, 10) is incorrectly positioned based on said detection of said first deviation;
- detecting a second deviation between said actual location and/or said actual geometry of said seat belt (4, 10) and said target location and/or said target geometry for said seat belt (4, 10);
- determining that said second deviation is a significant deviation;
- making a second determination that said seat belt (4, 10) is incorrectly positioned based on said detection of said second deviation, said second determination that said seat belt (4, 10) is incorrectly positioned being made within a pre-set time period from said first determination that said seat belt (4, 10) is incorrectly positioned;
- optionally repeating said second determination that said seat belt (4, 10) is incorrectly positioned one or more times;
- detecting an incorrect seat belt position; and
- issuing a warning that said seat belt (4, 10) is incorrectly positioned.

## Patentansprüche

1. Detektionssystem zum Detektieren einer Position eines Sicherheitsgurts, der einer Person (2, 7), die auf einem Fahrzeugsitz (3, 9) in einem Fahrzeug (1) sitzt, angelegt ist, wobei das Detektionssystem mindestens eine Detektionseinheit (14, 20) enthält, wobei die mindestens eine Detektionseinheit eine Einheit (14, 20) zum Detektieren von elektromagnetischer Strahlung ist, wobei das Detektionssystem konfiguriert ist, die Anwesenheit eines Sicherheitsgurts (4, 10) an mindestens einem Ort (31, 35, 36, 38) auf dem Körper der Person (2, 7), die auf dem Fahrzeugsitz (3, 9) sitzt, auf der Grundlage von Strahlungsdaten, die von der Detektionseinheit (14, 20) gefangen werden, zu bestimmen, wobei die mindestens eine Detektionseinheit konfiguriert ist, elektromagnetische Strahlung (23, 25) von einem oder mehreren Orten (35, 38) innerhalb eines Zielbereichs für einen korrekt angelegten Sicherheitsgurt (4, 10) zu detektieren und elektromagnetische Strahlung (23, 25) von einem oder mehreren Orten (31, 36) außerhalb eines Zielbereichs für einen korrekt angelegten Sicherheitsgurt (4, 10) zu detektieren und einen tatsächlichen Ort und/oder eine tatsächliche Geometrie des Sicherheitsgurts in Bezug auf den Körper der Person (2, 7), die auf dem Fahrzeugsitz (3, 10) sitzt, zu bestimmen und den tatsächlichen Ort und/oder die tatsächliche Geometrie des Sicherheitsgurts (4, 10) mit einem Zielort und/oder einer Zielgeometrie für den Sicherheitsgurt (4, 10) zu vergleichen, wobei das Detektionssystem konfiguriert ist, einen Insassen (2,7) des Fahrzeugs (1) über den Zustand des Anlegens des Sicherheitsgurts (4, 10) auf der Grundlage des Vergleichs zwischen dem tatsächlichen Ort und/oder der tatsächlichen Geometrie des Sicherheitsgurts mit dem Zielort und/oder der Zielgeometrie für den Sicherheitsgurt zu informieren, wobei das Detektionssystem konfiguriert ist, die Informationen über ein Infotainmentsystem in dem Fahrzeug (1) an den Insassen (2, 7) zu kommunizieren, **gekennzeichnet dadurch, dass** die Informationen in Form eines Bildes der tatsächlichen Geometrie in Bezug auf die Zielsicherheitsgurtgeometrie kommuniziert werden.

2. Detektionssystem nach Anspruch 1, wobei das Detektionssystem konfiguriert ist, eine Abweichung zwischen dem tatsächlichen Ort und/oder der tatsächlichen Geometrie des Sicherheitsgurts (4, 10) von dem Zielort und/oder der Zielgeometrie für den Sicherheitsgurt (4, 10) zu detektieren und zu bestimmen, ob die detektierte Abweichung eine deutliche Abweichung ist, wobei das Detektionssystem konfiguriert ist, zu erlauben, das die deutliche Abweichung in dem Detektionssystem eingestellt wird.

3. Detektionssystem nach Anspruch 2, wobei das Detektionssystem konfiguriert ist, zu erlauben, dass die deutliche Abweichung personalisiert ist, um Körpergröße, Sitzposition und physische Verhältnisse einer angeschnallten Person auszugleichen, und/oder für verschiedene Fahrzustände ausgelegt zu sein.

4. Detektionssystem nach einem der vorhergehenden Ansprüche, wobei die Informationen von dem Detektionssystem durchgehend an einen Insassen in dem Fahrzeug kommuniziert werden, was dem Insassen erlaubt, einen Zustand des Sicherheitsgurts auf einer angeschnallten Person zu überwachen.

5. Detektionssystem nach Anspruch 4, wobei der Insasse in dem Fahrzeug, der die kommunizierten Informationen empfängt, verschieden von der überwachten angeschnallten Person ist.

6. Detektionssystem nach einem der vorhergehenden Ansprüche, wobei das Infotainmentsystem konfiguriert ist, unterschiedliche Warnsignale und/oder Warnsignale unterschiedlicher Intensität abhängig von der Stärke einer detektierten Anomalie der Sicherheitsgurtgeometrie und/oder abhängig von einer aktuellen Verkehrssituation zu kommunizieren.

7. Detektionssystem nach einem der vorhergehenden Ansprüche, wobei der Sicherheitsgurt (4, 10) farbcodiert und/oder mustercodiert ist.

8. Detektionssystem nach einem der vorhergehenden Ansprüche, wobei der Sicherheitsgurt (4, 10) reflektierende Partikel und/oder Fasern enthält.

9. Verfahren zum Bestimmen der Position eines Sicherheitsgurts (4, 10), der einer Person (2, 7), die in einem Fahrzeugsitz (3, 9) in einem Fahrzeug (1) sitzt, angelegt ist, wobei das Verfahren Folgendes umfasst:
- Detektieren von elektromagnetischer Strahlung (23, 25) von einem oder mehreren Orten (35, 38) innerhalb eines Zielbereichs für einen korrekt angelegten Sicherheitsgurt (4, 10);
- Detektieren von elektromagnetischer Strahlung (23, 25) von einem oder mehreren Orten (31, 36) außerhalb des Zielbereichs für einen korrekt angelegten Sicherheitsgurt (4, 10);
- Bestimmen eines tatsächlichen Orts und/oder einer tatsächlichen Geometrie des Sicherheitsgurts (4, 10) in Bezug auf den Körper der Person (2, 7), die auf dem Fahrzeugsitz (3, 9) sitzt;
- Vergleichen des tatsächlichen Orts und/oder der tatsächlichen Geometrie des Sicherheitsgurts (4, 10) mit einem Zielort und/oder einer Zielgeometrie für den Sicherheitsgurt (4, 10) und
- Kommunizieren von Informationen an einen Insassen (2, 7) in dem Fahrzeug (1) über einen Zustand des Anlegens des Sicherheitsgurts (4, 10) auf der Grundlage des Vergleichs zwischen dem tatsächlichen Ort und/oder der tatsächlichen Geometrie des Sicherheitsgurts (4, 10) und dem Zielort und/oder der Zielgeometrie für den Sicherheitsgurt (4, 10), wobei die Informationen über ein Infotainmentsystem in dem Fahrzeug (1) kommuniziert werden, **dadurch gekennzeichnet, dass** die Informationen in Form eines Bildes der tatsächlichen Geometrie in Bezug auf die Zielsicherheitsgurtgeometrie kommuniziert werden.

10. Verfahren nach Anspruch 9, das ferner Folgendes umfasst:
- Detektieren einer ersten Abweichung zwischen dem tatsächlichen Ort und/oder der tatsächlichen Geometrie des Sicherheitsgurts (4, 10) und dem Zielort und/oder der Zielgeometrie für den Sicherheitsgurt (4, 10);
- Bestimmen, dass die erste Abweichung eine deutliche Abweichung ist;
- Vornehmen einer ersten Bestimmung, dass der Sicherheitsgurt (4, 10) falsch positioniert ist, auf der Grundlage der Detektion der ersten Abweichung;
- Detektieren einer zweiten Abweichung zwischen dem tatsächlichen Ort und/oder der tatsächlichen Geometrie des Sicherheitsgurts (4, 10) und dem Zielort und/oder der Zielgeometrie für den Sicherheitsgurt (4, 10);
- Bestimmen, dass die zweite Abweichung eine deutliche Abweichung ist;
- Vornehmen einer zweiten Bestimmung, dass der Sicherheitsgurt (4, 10) falsch positioniert ist, auf der Grundlage der Detektion der zweiten Abweichung, wobei die zweite Abweichung, dass der Sicherheitsgurt (4, 10) falsch positioniert ist, innerhalb einer voreingestellten Zeitdauer seit der ersten Bestimmung, dass der Sicherheitsgurt (4, 10) falsch positioniert ist, vorgenommen wird;
- optionales einmaliges oder mehrmaliges Wiederholen der zweiten Bestimmung, dass der zweite Sicherheitsgurt (4, 10) falsch positioniert ist;
- Detektieren einer falschen Sicherheitsgurtposition und
- Ausgeben einer Warnung, dass der Sicherheitsgurt (4, 10) falsch positioniert ist.

## Revendications

1. Système de détection pour détecter une position d'une ceinture de sécurité appliquée sur une personne (2, 7) assise dans un siège de véhicule (3, 9) dans un véhicule (1), ledit système de détection incluant au moins une unité de détection (14, 20), dans lequel ladite au moins une unité de détection est une unité de détection de rayonnement électromagnétique (14, 20), le système de détection étant configuré pour déterminer la présence d'une ceinture de sécurité (4, 10) à au moins un emplacement (31, 35, 36, 38) sur le corps de ladite personne (2, 7) assise dans ledit siège de véhicule (3, 9), en fonction de données de rayonnement obtenues à partir de ladite unité de détection (14, 20), dans lequel ladite au moins une unité de détection est configurée pour détecter un rayonnement électromagnétique (23, 25) à partir d'un ou de plusieurs emplacements (35, 38) à l'intérieur d'une zone cible pour une ceinture de sécurité correctement appliquée (4, 10) et pour détecter un rayonnement électromagnétique (23, 25) à partir d'un ou de plusieurs emplacements (31, 36) en dehors d'une zone cible pour une ceinture de sécurité correctement appliquée (4, 10) et pour déterminer un emplacement réel et/ou une géométrie réelle de ladite ceinture de sécurité par rapport audit corps de ladite personne (2, 7) assise dans ledit siège de véhicule (3, 10) et pour comparer ledit emplacement réel et/ou ladite géométrie réelle de ladite ceinture de sécurité (4, 10) à un emplacement cible et/ou une géométrie cible pour ladite ceinture de sécurité (4, 10), ledit système de détection étant configuré pour informer un occupant (2, 7) dans ledit véhicule (1) d'un état d'application de ladite ceinture de sécurité (4, 10), en fonction de ladite comparaison entre ledit emplacement réel et/ou ladite géométrie réelle de ladite ceinture de sécurité et ledit emplacement cible et/ou ladite géométrie cible pour ladite ceinture de sécurité, ledit système de détection étant configuré pour communiquer lesdites informations audit occupant (2, 7) par l'intermédiaire d'un système d'information-divertissement dans ledit véhicule (1), **caractérisé en ce que** lesdites informations sont communiquées sous forme d'image de ladite géométrie réelle de ceinture de sécurité par rapport à ladite géométrie cible de ceinture de sécurité.

2. Système de détection selon la revendication 1, dans lequel ledit système de détection est configuré pour détecter un écart entre ledit emplacement réel et/ou ladite géométrie réelle de ladite ceinture de sécurité (4, 10) par rapport audit emplacement cible et/ou à ladite géométrie cible pour ladite ceinture de sécurité (4, 10), et pour déterminer si ledit écart détecté est un écart important, dans lequel ledit système de détection est configuré pour permettre audit écart important d'être défini dans ledit système de détection.

3. Système de détection selon la revendication 2, dans lequel ledit système de détection est configuré pour permettre audit écart important d'être personnalisé pour compenser la taille corporelle, la position assise et des conditions physiques d'une personne ayant mis sa ceinture de sécurité et/ou d'être adapté à différentes conditions de conduite.

4. Système de détection selon l'une quelconque des revendications précédentes, dans lequel lesdites informations provenant dudit système de détection sont communiquées en continu à un occupant dans ledit véhicule, ceci permettant audit occupant de surveiller un état de ladite ceinture de sécurité sur une personne ayant mis sa ceinture de sécurité.

5. Système de détection selon la revendication 4, dans lequel ledit occupant dans ledit véhicule recevant lesdites informations communiquées est différent de ladite personne surveillée ayant mis sa ceinture de sécurité.

6. Système de détection selon l'une quelconque des revendications précédentes, dans lequel ledit système d'information-divertissement est configuré pour communiquer différents signaux d'avertissement et/ou des signaux d'avertissement de différente intensité en fonction de la gravité d'une anomalie détectée dans ladite géométrie de ceinture de sécurité et/ou en fonction d'une situation de circulation actuelle.

7. Système de détection selon l'une quelconque des revendications précédentes, dans lequel ladite ceinture de sécurité (4, 10) est dotée d'un code de couleurs et/ou d'un code de motifs.

8. Système de détection selon l'une quelconque des revendications précédentes, dans lequel ladite ceinture de sécurité (4, 10) inclut des particules et/ou fibres réfléchissantes.

9. Procédé pour déterminer la position d'une ceinture de sécurité (4, 10) appliquée sur une personne (2, 7) assise dans un siège de véhicule (3, 9) dans un véhicule (1), ledit procédé comprenant :
- la détection d'un rayonnement électromagnétique (23, 25) à partir d'un ou de plusieurs emplacements (35, 38) à l'intérieur d'une zone cible pour une ceinture de sécurité correctement appliquée (4, 10) ;
- la détection d'un rayonnement électromagnétique (23, 25) à partir d'un ou de plusieurs emplacements (31, 36) en dehors de ladite zone cible pour une ceinture de sécurité correctement appliquée (4, 10) ;
- la détermination d'un emplacement réel et/ou d'une géométrie réelle de ladite ceinture de sécurité (4, 10) par rapport audit corps de ladite personne (2, 7) assise dans ledit siège de véhicule (3, 9) ;
- la comparaison dudit emplacement réel et/ou de ladite géométrie réelle de ladite ceinture de sécurité (4, 10) à un emplacement cible et/ou une géométrie cible pour ladite ceinture de sécurité (4, 10) ; et
- la communication d'informations, à un occupant (2, 7) dans ledit véhicule (1), relatives à un état d'application de ladite ceinture de sécurité (4, 10), en fonction de ladite comparaison entre ledit emplacement réel et/ou ladite géométrie réelle de ladite ceinture de sécurité (4, 10) et ledit emplacement cible et/ou ladite géométrie cible pour ladite ceinture de sécurité (4, 10), lesdites informations étant communiquées par l'intermédiaire d'un système d'information-divertissement dans ledit véhicule (1), **caractérisé en ce que** lesdites informations sont communiquées sous forme d'image de ladite géométrie réelle de ceinture de sécurité par rapport à ladite géométrie cible de ceinture de sécurité.

10. Procédé selon la revendication 9, comprenant en outre :
- la détection d'un premier écart entre ledit emplacement réel et/ou ladite géométrie réelle de ladite ceinture de sécurité (4, 10) et ledit emplacement cible et/ou ladite géométrie cible pour ladite ceinture de sécurité (4, 10) ;
- la détermination que ledit premier écart est un écart important ;
- la réalisation d'une première détermination que ladite ceinture de sécurité (4, 10) est incorrectement positionnée en fonction de ladite détection dudit premier écart ;
- la détection d'un second écart entre ledit emplacement réel et/ou ladite géométrie réelle de ladite ceinture de sécurité (4, 10) et ledit emplacement cible et/ou ladite géométrie cible pour ladite ceinture de sécurité (4, 10) ;
- la détermination que ledit second écart est un écart important ;
- la réalisation d'une seconde détermination que ladite ceinture de sécurité (4, 10) est incorrectement positionnée en fonction de ladite détection dudit second écart, ladite seconde détermination que ladite ceinture de sécurité (4, 10) est incorrectement positionnée étant réalisée au sein d'une période prédéterminée à partir de ladite première détermination que ladite ceinture de sécurité (4, 10) est incorrectement positionnée ;
- optionnellement, la répétition de ladite seconde détermination que ladite ceinture de sécurité (4, 10) est incorrectement positionnée une ou plusieurs fois ;
- la détection d'une position incorrecte de ceinture de sécurité ; et
- l'émission d'un avertissement indiquant que ladite ceinture de sécurité (4, 10) est incorrectement positionnée.
